# EUROPEAN PATENT APPLICATION

(11) **EP 1 894 616 A1**
(43) Date of publication of application: **05.03.2008**
(21) Application number: 06405374.7
(22) Date of filing: 30.08.2006
(51) Int. Cl.: B01F 5/06

(54) **Static mixing device**

(71) Applicant: Fachhochschule Zentralschweiz, 6002 Luzern (CH)
(72) Inventor: Casartelli, Ernesto, 6330 Cham (CH)
(74) Representative: Liebetanz, Michael

(57) **Abstract**

A Static mixing device for mixing at least two components in a flow channel (3) by means of at least one deflection element (1). The deflection element (1) comprises a first section (10) having a dividing surface (11) that is arranged in flow direction (2) and a second section (20) that is adjacent to the first section (10). The second section (20) extends by means of at least one first deflectorpart (25) above and by means of at least one second deflectorpart (26) below the dividing surface (11). The first deflectorpart (25) and the second deflectorpart (26) are connected via a deflectorpartlink (27).

## Description

### Field of the invention

The invention relates to a static mixing device for mixing a first component with at least one second component.

### Prior Art

EP 0 526 393 discloses a static mixing device having a flow channel for mixing a small quantity of a second fluid that is different from a first fluid that flows in a duct. The mixing device comprises dispensing tubes for introducing the second fluid and deflectors for mixing the first fluid with the second fluid. The deflectors are arranged one behind the other in the duct.

EP 0 913 568 shows a mixer ejector suppressor having a deflector that is arranged as a tube. This mixing device is used to reduce noise by mixing fluids having very high but different flow velocities. Such high velocities are significant in turbines of airplanes. The aim of a device according to EP 0 913 568 is therefore to reduce the gradient of air velocities, resulting in an increased spreading angle of the exhaust gases and as a consequence reduced noise.

The mechanical design of such known mixing devices is usually very complex and thus costly. Another lack is that known mixing devices are designed for applications with one component having a high flow velocity. Another drawback is that the resulting mixture does not cope with the requirements regarding homogeneity. Another lack is that such mixing devices usually have a high loss in pressure which is negative for the performance of the mixing device.

### Summary of the invention

An object of the present invention is to provide a static mixing device that is enabled to mix at least one gaseous, liquid or solid component with another gaseous, liquid or solid component in order to receive a mixture with a high homogeneity with low pressure losses in the mixing process. Additionally the static mixing device shall be used for applications where both components have lower flow velocities, compared to device of prior art.

A Static mixing device according to the present invention is for mixing at least two components in a flow channel by means of at least one deflection element. The deflection element comprises a first section having a dividing surface that is arranged in flow direction and a second section that is adjacent to the first section. The second section extends by means of at least one first deflectorpart above and by means of at least one second deflectorpart below the dividing surface. The first deflectorpart and the second deflectorpart are connected via a deflectorpartlink.

The dividing surface has a planar surface or a surface that is curved or a combination of them so that the leading edge of the cross section of the dividing surface has a piecewise straight or curved shape, like a sinus wave or a semicircular wave or a segment of a circle. Although embodiments described in this specification always have a dividing surface, it is possible to reduce the dimension of the dividing surface in flow direction until the dividing surface is reduced to leading edge, i.e. said leading edge defines the division and directly connects to the deflectorpartlinks.

Preferably the height of the first deflectorpart and the height of the second deflectorpart increase in flow direction.

This is particularly advantageous because it leads to whirls in the flow of the components to be mixed and therefore a homogeneous mixture results.

The first deflectorpart and/or the second deflectorpart have preferably a planar surface or a surface that is curved or combination of both so that the deflectorline or the cross section of the first deflectorpart and/or the second deflectorpart have a piecewise straight or curved shape, like a sinus wave or a semicircular wave or a segment of a circle.

Such different shapes influence efficiency of the mixing device according to the present invention.

Preferably the deflectorpartlink has a planar or a curved surface.

Preferably a plurality and/or an array of deflection elements are arranged one above and/or in front of the other in order to build an arrangement of deflection elements.

### Brief description of the drawings

The drawings will be explained in greater detail by means of a description of an exemplary embodiment, with reference to the following figures:
- Fig. 1: shows a schematic side view of a channel with a mixing device according to the present invention;
- Fig. 2: shows a schematic front view according to figure 1;
- Fig. 3: shows a perspective view of a first embodiment of a deflection element of a static mixing device according to the present invention;
- Fig. 4: shows a front view according to the embodiment as shown in figure 3;
- Fig. 5: shows a perspective view of a second embodiment of a deflection element of a static mixing device according to the present invention;
- Fig. 6: shows a front view according to the embodiment as shown in figure 5;
- Fig. 7: shows a perspective view of a third embodiment of a deflection element of a static mixing device according to the present invention;
- Fig. 8: shows a front view according to the embodiment as shown in figure 7;
- Fig. 9: shows a perspective view of a fourth embodiment of a deflection element of a static mixing device according to the present invention;
- Fig. 10: shows a front view according to the embodiment as shown in figure 9;
- Fig. 11: shows a perspective view of a fifth embodiment of a deflection element of a static mixing device according to the present invention;
- Fig. 12: shows a front view according to the embodiment as shown in figure 11;
- Fig. 13: shows a perspective view of a sixth embodiment of a deflection element of a static mixing device according to the present invention;
- Fig. 14: shows a front view according to the embodiment as shown in figure 13;
- Fig. 15a: shows a schematic side view of an arrangement of several deflection elements in order to form a mixing device according to the present invention;
- Fig. 15b: shows a schematic side view of a further arrangement of several deflection elements;
- Fig. 16a/b: show a further possible configuration of an arrangement of deflection elements in order to form a mixing device according to the present invention;
- Fig. 17a/b: show a further possible configuration of an arrangement of deflection elements in order to form a mixing device according to the present invention;
- Fig. 18 a/b: show a further possible configuration of an arrangement of deflection elements in order to form a mixing device according to the present invention;
- Fig. 19 a/b: show a further possible configuration of an arrangement of deflection elements in order to form a mixing device according to the present invention;
- Fig. 20: shows a configuration of several different arrangements; and
- Fig. 21: shows schematically a further embodiment of a mixing device according to the present invention.

### Detailed description of the preferred embodiments

A static mixing device according to the present invention is used for mixing at least one gaseous or liquid or solid first component with a second component that is also gaseous or liquid or solid in order to receive a mixture with a high homogeneity. It has to be noted, that if one of the components is solid, at least one of the further components to be mixed is preferably gaseous or liquid. The components preferably flow in a channel.

At least one deflection element is arranged in the flow channel. By means of said deflection element, at least two components will be mixed together in order to obtain a resultant component with a homogeneous mixture. Due to the virtual absence of separation the mixing process leads to low pressure losses, compared to the prior art.

The static mixing device according to the present invention can be used for chemical or biological applications, process engineering, food technology, or production of pharmaceuticals.

It is also possible to use the mixing device according to the present invention in the field of medical technology. Especially if sensitive fluids have to be mixed, such as blood or parts of blood. Since the loss of pressure is generally small, the fluids or components are mixed together in a very gentle manner.

One preferable use of such a static mixing device according to the present invention is an application for fluid flow velocities between 1 mm/s and 20 m/s. The lower velocities are typical in high viscosity fluids or in mini- and micro-channels (i.e. laminar flow) while the higher velocities occur for example in liquids or gases in large devices under turbulent conditions.

One further possible use of such a static mixing device according to the present invention is the application in internal combustion engines, placing it in front of the inlet valve of the cylinder. Here the above disclosed flow velocities are characteristic. Mixing of the components which will be introduced in the combustion chamber of an internal combustion engine that drives motorized vehicle, such as a car, a truck, a motorcycle, a railway vehicle, or a ship etc. will be enhanced considerably due to the streamwise whirls which are generated. The result is improved combustion efficiency and reduced pressure losses in the intake and cylinder. In this case the flow velocities can vary between 30 and 150 m/s.

Other applications of a mixing device according to the present invention are also conceivable.

The shape of the flow channel or flow duct is arbitrary. Preferably flow channels are used having a circular, a rectangular or a quadratic cross section. But other geometric cross-sectional shapes are also possible. It is even possible to use channels that are open on the upper side. If the cross section is rectangular or quadratic, the duct or the flow channel is stackable on another duct or flow channel.

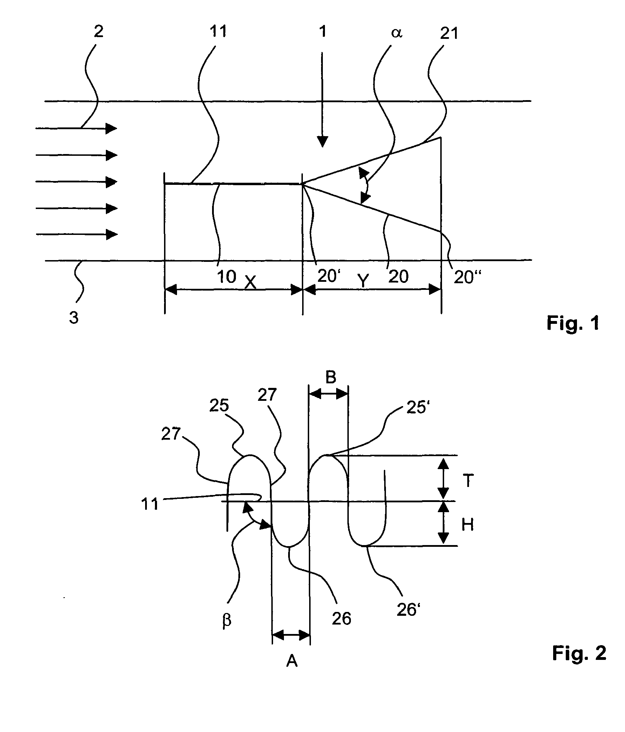

Figure 1 shows a schematic side view of a mixing device according to the present invention. It has to be noted that the following applies to all of the embodiments as described below. Inside a duct or channel 3 a deflection element 1 is arranged having a first section 10 and a second section 20. In this exemplary drawing the deflection element 1 is arranged parallel to channel 3 and the fluid flow 2 flows also in that direction. This means that a dividing surface 11 of the first section is parallel to the axis of channel 3. The dividing surface 11 can be planar or curved. In a further embodiment the dividing surface 11 has an appropriate structure. Such a structure may have a cross section that has a wavelike form. The function of the dividing surface is to separate the flow 2 in a upper and a lower flow before the section 20.

Usually, before passing the deflection element 1, the flow 2 which comprises at least two different fluids or components, is inhomogeneous. Since the mixing process is fully developed behind the deflection element 1 as it will be explained later, it is also possible to introduce the second or further fluids or components behind the deflection element 1 itself, because the vortical structure imposed by the mixing device, which is responsible for the mixing, is already present in the flow 2.

It is also possible to introduce the second or further fluid or components near the deflection element 1. This means that the second or further components will enter into the channel 3 in the area of the first section 10 and/or the second section 20.

Furthermore it is also be possible to introduce the second or further fluid or components before the deflection element 1. This means that the flow 2 will be already a mixture, albeit an inhomogeneous mixture, while overflowing the leading edge 12.

Recapitulating it is understood that the second or any further fluid or component to be mixed may be introduced in the first component that flows in flow channel 3 at any point around the deflection element 1, even past the leading edge of the dividing surface, in case that the deflection element directly contacts inlet portions.

In a first step the flow 2 is divided in two parts while overflowing an entering or a leading edge 12 of the dividing surface 11. A first part of the flow passes the deflection element 1 above the dividing surface 11 and a second part of the flow passes the deflection element 1 below the dividing surface 11. After passing the first section 10 both parts of the flow pass the second section 20. While passing the second section 20 the first and the second flow will be deflected by the shape of the second section 20. The second section 20 ends with a deflectorline 24. The deflectorline 24 is also designated as trailing edge, since the flow exits the deflection element as soon as it passes said deflectorline 24. After leaving the deflectorline 24, a whirled flow results. This is the moment where the two flows will start to be mixed together due to the produced vortical structures. The first flow and the second flow will therefore be mixed together. Due to that process at least two fluids or components of the flow will be mixed together in a homogeneous manner.

The leading edge 12 and the trailing edge 24 do not necessarily have to lay in a plane perpendicular to the flow direction 2. For example the projection could form a circular arc.

The first section 10 has an axial length that is designated with a letter X, whereas the second section 20 has an axial length that is designated with a letter Y. If X and Y have an equal length, the ratio X:Y is 1:1. Such a ratio provides very good results in terms of a homogeneous fluid and small pressure loss. It is also possible to choose the length X of the first section 10 smaller or longer than the length Y of the second section 20. Preferably X:Y is between 1:10 to 1:1, more preferably between 1:3 to 1:1. It is also possible that the first section 10 is nonexistent. However, this leads to small separation when the fluid flows over the deflection element 1, thus leading to an increased loss of pressure. The quality of the mixture in terms of a homogeneous fluid is similar, however.

It is possible that edge 12 is adjacent to the inlet of the fluid components so that the initial upper and lower flows are completely separated. Edge 12 can also be provided in any distance to such an inlet or other structures in the flow channel, for example the distance may be lower than the sum of the length X and the length Y.

Another important dimension is the opening angle α of the second section 20. As already mentioned this applies to all embodiments according to the present invention as described below. The angle α extends from the uppermost edge of the second section 20 to the lowermost edge of this section. Preferably the first section 10 and the second section 20 are arranged so, that the first section builds the angle bisector of the angle α. This means that the second section 20 extends α/2 above the dividing surface 11 and α/2 below the dividing surface 11. Other combinations are also possible. The angle α is preferably between 5° and 45°. In particular is α between 10° and 35°.

The leading edge 12 may be a sharp edge that results when a sheet of metal is cut or it may also be formed in order to keep pressure losses and other negative influences small. A formed edge includes, but is not limited to, a rounded or a tapered shape. In particular the latter will be applied, if the flow is not parallel to the dividing surface 11.

The deflectorline 24 may comprise analogous features as disclosed with the leading edge 12. Here a formed edge is particularly advantageous if vibrations resulting from the flow are present. Said vibrations may be limited by means of a formed deflectorline 24. A formed edge includes, but is not limited to, a rounded or a tapered shape.

Reference is now made to figure 2 that shows schematically a front view of figure 1. Another characteristic angle is an opening angle β. Said opening angle β describes the angle between a deflectorpartlink 27 and the dividing surface 11. The deflectorpartlink 27 links a lower part of the deflection element 1 which is designated as first deflectorpart 25 and an upper part which is designated as second deflectorpart 26. More details regarding the shape of the deflection element 1 and its sections 10, 20 are disclosed below. The angle β is preferably around 90°. But it is also possible to choose β smaller or larger than 90°. If the angle β is smaller than 90° the mixture becomes more easily homogeneous, but the loss of pressures increases. If the angle β is larger than 90°, the mixture may become less homogeneous.

The length A describes the width of a first deflectorpart 25 and the length B describes the width of a second deflectorpart 26 between the points where two subsequent deflectorpartlink 27 crosses the dividing of section 11. The length A and B may be equal or unequal. The latter meaning that the dimension A is larger or smaller than the dimension B. Furthermore it is also possible that the length A of a first deflectorpart 25 and a further deflectorpart 25' are different or equal to each other. The resulting in an irregular shape. The same applies also to the second deflectorpart 26. This means that dimension A and the dimension B may decrease gradually over the whole length L of the deflection element 1. Additionally it is for example possible that the dimension A and B are larger in the middle part, meaning around L/2 of a deflection element 1 than in the border areas of the deflection element 1.

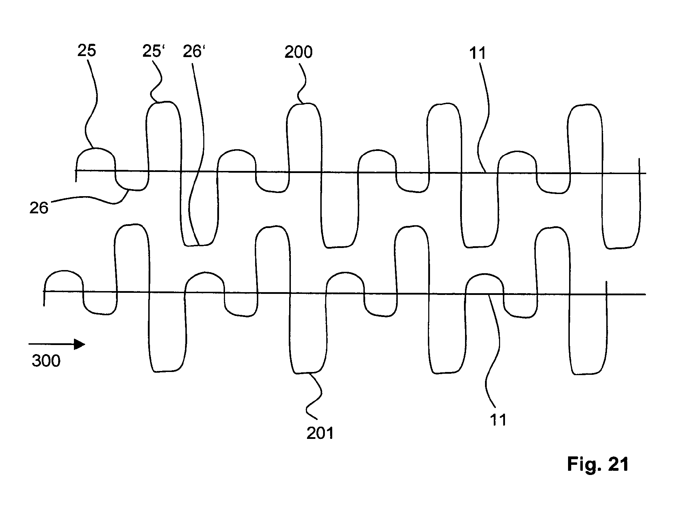

The height T of the first deflectorpart 25 describes the distance between the dividing surface 11 and the highest point of a deflectorpart 25. The height of the second deflectorpart 26 is designated as height H. It has to be noted the height T of the first deflectorpart 25 and the height H of the second deflectorpart 26 may be equal or unequal. In the present embodiment the height H and the height T have the same value. Furthermore it is also possible that the height of a first deflectorpart 25 and a further subsequent deflectorpart 25' are equal or unequal. The same applies also to the height T of the second deflectorpart 26 and a subsequent further deflectorpart 26'. Figure 2 for example shows an embodiment where H or T are equal. Figure 21 shows an embodiment in which the height of a first deflectorpart 25, 26 is unequal to the height of a subsequent deflectorpart 25', 26'.

Preferably a device according to the present invention comprises at least a first deflectorpart 25, a further deflectorpart 25', a second deflectorpart 26 and a further deflectorpart 26'. However a device according to the present invention may also comprise a plurality of said deflectorparts 25, 25', 26, 26'.

In Figure 1 it may be realized that the heights H and T increase in flow direction 2. This means that the second section 20 has in its first area 20', where the flow enters the region of deflection, the same or almost the same height as the first section 10. The height then is increasing towards its second area 20", where the flow leaves the deflection element 1.

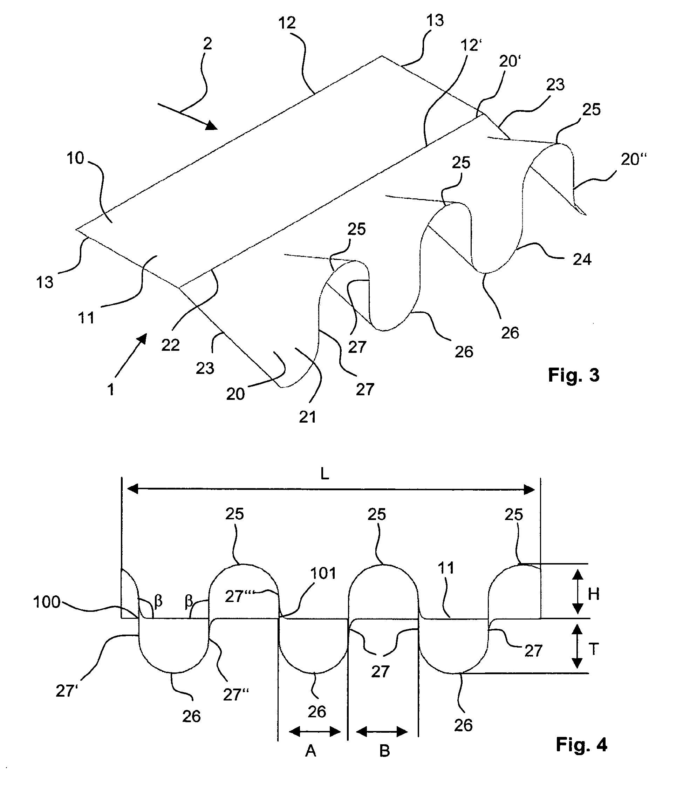

Figure 3 and 4 show a deflection element according to a first embodiment of the present invention in a front view and perspective view, respectively, for use in a channel.

The deflection element 1 in this embodiment comprises the first section 10 and the second section 20. The first section 10 has a dividing or even surface 11. The second section 20 has an uneven surface 21. Also indicated in figure 1 by means of an arrow 2 is the flow direction of the fluids or components. The dividing surface 11 lies preferably in flow direction 2.

In the first embodiment of the present invention the dividing surface 11 is usually shaped as a rectangle having two long edges 12, 12' and two short edges 13. The ratio between the length of the long edge 12 and the length of the short edge 13 is arbitrary. However it is even possible that the length of the short edge 13 is longer than the length of the long edge 12. It is also possible that the dividing surface 11 is a quadrate. The long edge 12 that is not being adjacent to the second section 20 is also designated as leading edge 12, since the flow will enter the deflection element 1 at this edge 12. As mentioned before, the dividing surface 11 can be also slightly curved, e.g. as a circular arc or as a wavelike structure.

The uneven surface 21 of the second section 20 comprises a first edge 22, a side edge 23, here two side edges 23, and a second edge 24. The second edge 24 that is not adjacent to the first section 10 is also designated as deflectorline 24 or exiting edge or trailing edge. As it may be seen from figure 3, the first edge 22 and the two side edges 23 are straight edges. The second edge 24 is corrugated. Thereby a first deflectorpart 25 extends above the dividing surface 11 and a second deflectorpart 26 extends below the dividing surface 11. The first deflectorpart 25 and the second deflectorpart 26 are connected via a deflectorpartlink 27. Thereby a structure results that has a wavelike shape.

The first section 10 is adjacent to the second section 20. Here one of the long edges 12 is adjacent to the first edge 22. Since the deflection element 1 is usually formed out of one part, the edges between the first section 10 and the second section 20 become non-existent, the representation of the surface line in flow direction is mostly continuously differentiable. In certain structures it is also possible that the edge between the first section 20 and the second section 20 is clearly recognizable.

Reference is now also made to figure 4, which shows the deflection element 1 according to the first embodiment in a front view. Reference numeral 100 indicates the starting point of the description. Here at point 100 a deflectorpartlink 27' crosses the dividing surface 11 and extends below the dividing surface 11. The first deflectorpartlink 27' then passes over in the first deflectorpart 26. Thereby the angle β between the deflectorpartlink 27' and the dividing surface 11 is 90°. The first deflectorpart 26 here has a shape of a semicircle in the cross sectional view. The first deflectorpart 26 then passes over in a further deflectorpartlink 27" which extends above the dividing surface 11 and passes over to the second deflectorpart 25. The second deflectorpart 25 here has a shape of a semicircle in the cross sectional view. The second deflectorpart 25 then passes over in a further deflectorpartlink 27''', which crosses the dividing surface 11 at a point that is designated with a reference numeral 101. The just described distribution of the first deflectorpart 26, the second deflectorpart 25 and the deflectorpartlink 27 repeats itself several times depending on the length L of the deflection element 1. In this embodiment the shape deflectorline 24 is also designated as wave.

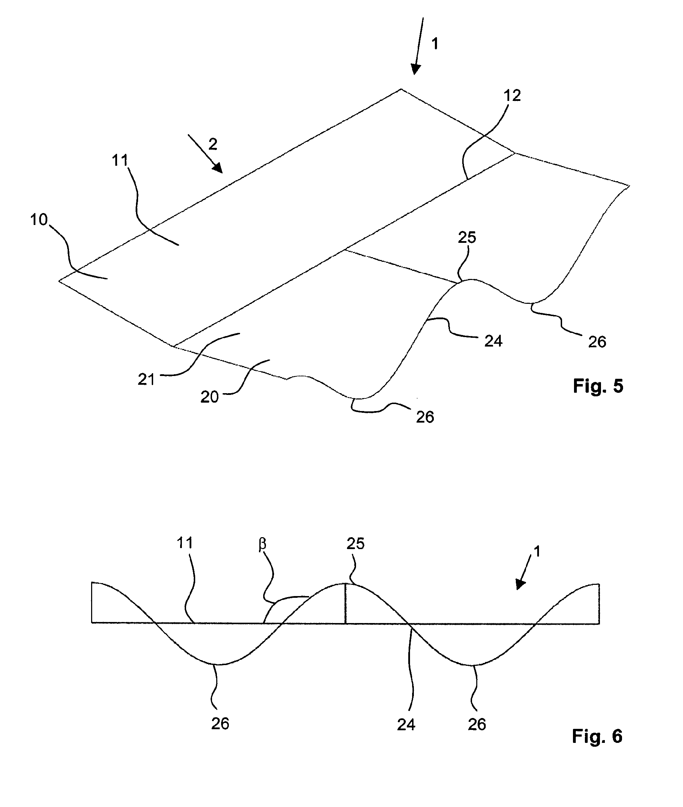

Figure 5 and 6 show a second embodiment of a deflection element 1 according to the present invention. The deflectorline 24 in this embodiment has the shape of a sinus curve. This means that the angle β is larger than 90°. For the same length of the second section 20 T and H are smaller in the embodiment according to figure 3 and 4.

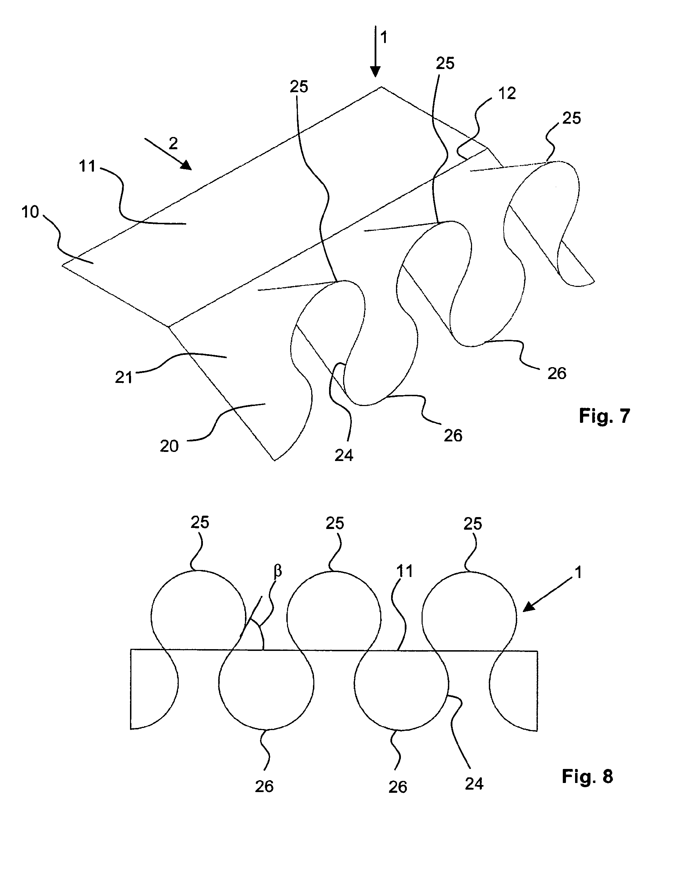

Figures 7 and 8 show a third embodiment of a deflection element 1 according to the present invention. In this embodiment the deflectorline 24 has a similar shape as in the first embodiment, but the segment of the circle is larger than the semicircle as disclosed in the first embodiment. This means that the angle β is smaller than 90°. The deflectorflow is confined in a tube like cross section, whereby the tube like cross section has an angular segment that is larger than 180°.

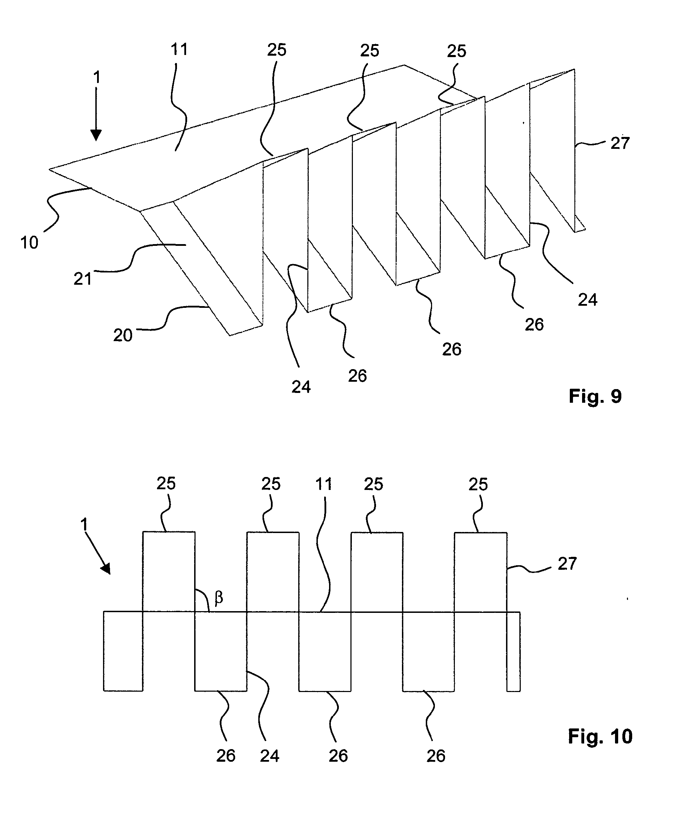

Figures 9 and 10 show a fourth embodiment of a deflection element 1 according to the present invention. Here the deflectorline 24 has a shape of a rectangular wave. Such a shape results since the first deflectorpart 25, the second deflectorpart 26 and the deflectorpartlink 27 have the shape of plane surfaces. The deflectorpartlink 27 extends perpendicular to the dividing surface 11. This means that the angle β is 90°. The deflected flow is confined in a tube with constricting cross section.

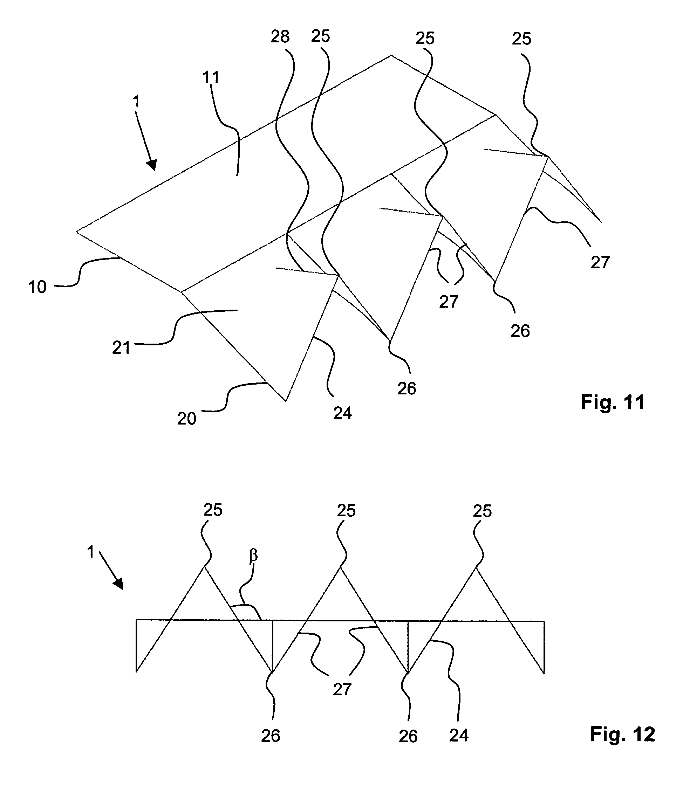

Figures 11 and 12 show a fifth embodiment of a deflection element 1 according to the present invention. Here the deflectorline 24 has a shape of a triangular wave, wherein the surface 21' of the second section 20 is curved in a manner that ridges 28 are only built towards the deflectorline 24.

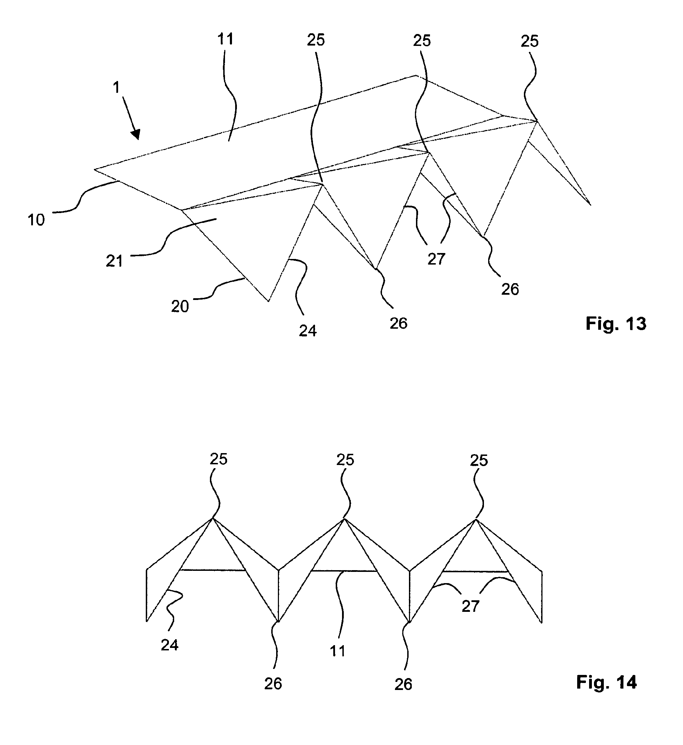

Figures 13 and 14 show a sixth embodiment of a deflection element 1 according to the present invention. Similarly to the sixth embodiment the deflectorline 24 has here also the shape of a triangular wave with the difference that all surfaces of the second section are planar surfaces.

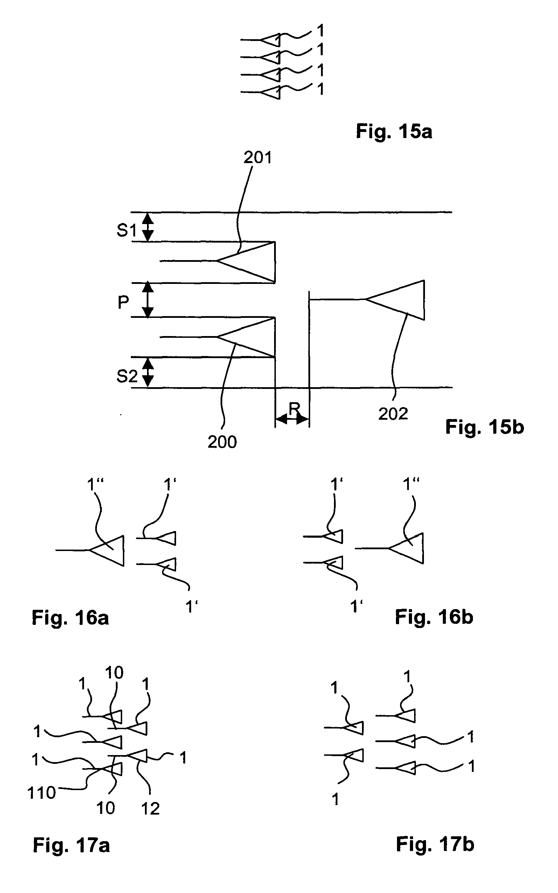

Figure 15a shows a first embodiment of an arrangement of a plurality of deflection elements 1. Four deflection elements 1 are shown as an example. The four deflection elements 1 are arranged in a parallel manner, one above the other. The deflection elements are either arranged one above the other without an offset in an axis or direction perpendicular to the flow axis of the fluid or with an offset in that direction. The direction perpendicular to the flow direction may be understood as the axis of that direction lies in the plane of the dividing surface 11 of the deflector element 1. An offset in said direction or axis will cause that a first deflectorpart of a first deflection element 1 is not in line with a first deflectorpart of a second deflection element 2.

Figure 15b shows characteristic dimension of an arrangement of a plurality of deflection elements 1. The distance between a lower deflection element 200 or an upper deflection element 201 and the wall of the duct 3 is designated as dimensions S1 and S2. The distances S1 and S2 are the clearance between the duct and the first or second deflectorpart 25, 26 at their largest extension. S1 and S2 may have different or equal values. The distance of the clearance between the lower deflection element 200 and the upper deflection element 201 is designated as dimension P. As it can be seen in figure 15b a further deflection element 202 can be arranged in front of the upper and the lower deflection element 200, 201.

The dimensions P, S1 and S2 may vary between a dimension that is 0mm and a dimension that is determined using the equation Kx(H+T). This means 0 ≤ P ≤ Kx(H+T) or 0 ≤ S1 ≤ Kx (H+T) or 0 ≤ S2 ≤ Kx(H+T). Typically the constant K is between 0.1 and 5. Preferably K is between 0.25 and 0.5.

In case only one deflection element is arranged the equations as explained above are still valid, but one has to consider that S1 and S2 in that case are preferably equal. However it is also possible that in such a case S1 is not equal to S2. In case more than two deflection elements are arranged it is possible that the dimension P between them is equal or variable.

Furthermore it has to be mentioned that several, not only three, deflector elements may be arranged in a manner as shown in figure 15b.

In case of an arrangement of elements in flow direction, the distance between the deflectorline 24 of the upper and the lower deflection element 200, 201 and the leading edge 12 of the deflection element 202 is designated as dimension R. In general the dimension R can vary between 0 and 10 times length of the deflection element 1, which is X+Y. Preferably the ratio is between 0 and 1:1.

Figures 16a and 16b show a further embodiment of an arrangement of a plurality of deflection elements 1. Here two small deflection elements 1' are arranged parallel to each other and a large deflection element 1'' is arranged serially before or after the parallel arrangement.

Figures 17a and 17b show a further embodiment of an arrangement of deflection elements 1 according to the present invention. In figure 17a a plurality of deflection elements, here five, are arranged in a serial and parallel manner. Three deflection elements 1 are arranged in a first set 110 in a parallel manner. Two deflection elements are arranged in a second set 120 in a parallel manner. The first set 110 is then arranged in front of the second set 120. Thereby the first section 10 of the deflection elements in the second set 120 protrudes in the first set 110. In figure 17 the second set 120 is arranged in front of the first set 110. Here it is illustrated that none of the parts of the two sets protrudes in one of the sets. But it is possible that some sections or parts of the first set 110 protrude in the second set 120.

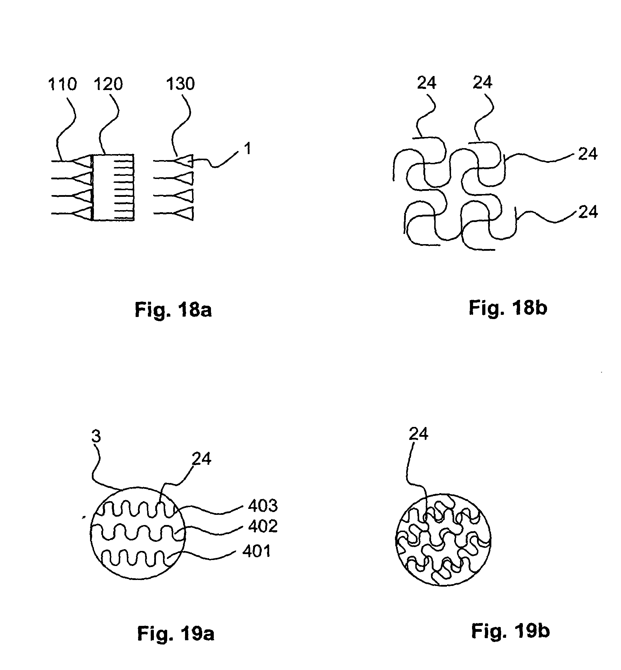

Figures 18a shows a further arrangement of deflection elements 1 in a side view thereby a plurality of sets here a first set 110, a second set 120 and a third set 130 are arranged on behind the other. Each of the sets comprises as already explained a plurality of deflection elements. In this embodiment each of the sets 110, 120, 130 are arranged with an angle in respect to each other. In the embodiment as shown in figure 18a the second set 120 is arranged in an angle of 90° with respect to the first set 110 and the second set 120. However other angles are also possible. It is for example conceivable that the second set 120 is oriented 45° in respect to the first set 110 and that the third set is oriented 90° in respect to the first set 110. This kind of arrangement can be combined with the one described in Figures 17b.

Figure 18b shows the arrangement of figure 18a in a front view. In this view only the deflectorline 24, here the deflectorline according to the first embodiment of the deflection element, is shown. The orientation between the first and the second set is visible.

Figure 19a shows the above described arrangements or sets arranged in a channel 3 having a circular cross-section. Thereby three deflection elements 401, 402, 403 are arranged in the channel 3. The distance between the three deflection elements can be irregular. Moreover S1 and S2 as they were described by means of figure 15b can have different values. The middle deflection element 402 that is arranged between the upper deflection element 403 and the lower deflection element 401 can be arranged with a larger distance between the middle deflection element 402 and lower deflection element 401.

Figure 19b shows the above described arrangements or sets arranged in a channel 3 having a circular cross-section. The deflection elements are arranged in an angle of 45° to each other.

According to the described embodiments it is possible to combine any of the described deflection elements in any of the described arrangements.

All of the disclosed arrangements provide whirls in flow direction. This means that the core of the whirl is in the main flow direction. Especially in a channel having a circular cross section. Since usually no separation occurs during the whirls generation, the process of mixing two or more fluids together is very efficient and the pressure loss is low.

However it has to be noted that the resultant mixture is also dependent on any additional devices that add any components or other fluids.

Furthermore it is possible that the mixing device according to the present invention is used to mix components having a different phase. As an example: gaseous components with liquid components; gaseous components with solid components; liquid components with solid components.

It has also to be noted that the resultant mixture does not depend whether the flow is laminar or turbulent. However if the flow is laminar it may be advantageous to provide several of the above arrangements in a serial manner one behind the other. This will lead to optimal results.

The dimension of the mixing device according to the present is not limited. This means that the device is able to operate in a macro-range and in a micro-range. The macro-range is defined as having channels with cross sections with diameters up to several meters, whereas the micro-range is defined as having a diameter of few micrometers. However an application between the two ranges is also possible.

The disclosed static mixing device is made of a material chosen from the group of metals, plastics or metal/plastic compounds. The use of other materials (i.e. ceramics, carbon fiber, fiber composites, wood) is also possible.

The surface of the static mixing device, in particular the deflection element 1 is preferably smooth or even polished. Rough or structured surfaces are also possible, but the loss of pressure here is higher. Furthermore it is possible to coat the surface. Such a coating may be nano structured coating. Said structures may comprise recesses that are aligned parallel or rectangular or in any angle with reference to the flow direction. Therefore the recesses have a channel-like shape in its cross-sectional view.

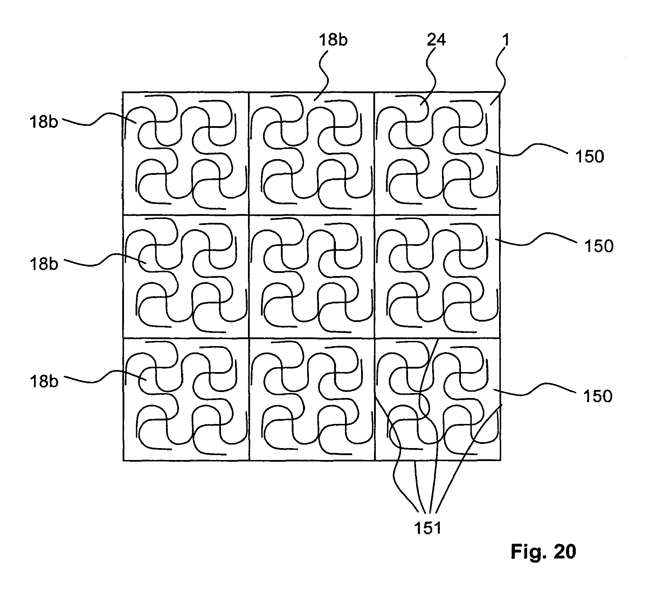

Figure 20 shows a combination of a plurality of arrangements according to the arrangement as disclosed in figure 18b. However this embodiment serves as an example only and all other embodiments as described above may also be used. Several rectangular arrangements 18b are arranged adjacent to each other. This is possible in all two or three dimensions, i.e. to create a parallelepiped or a cube. Therefore it is possible to arrange arrangements 18b also one behind the other. Such an arrangement is also designated as a packaging. The resultant cross-sectional shape here is rectangular. But a plurality of arrangements may also be introduced into a channel having a circular cross-section. Furthermore it is possible that packing is built out of several elements 150 having walls 151, wherein the deflection elements are arranged inside the walls 151. Here the elements 150 have a quadratic shape. Other shapes such as triangular, circular or rectangular are also possible. Additionally the walls 151 may also be replaced by a frame. The deflection elements 1 may then be inserted into the frame.

In a further not shown embodiment it is also possible to add such an arrangement in a channel that is open on one side.

Figure 21 shows a further embodiment of an arrangement of a plurality of deflection elements 200, 201 according to the present invention in a schematic front view. Here it may be seen that deflection element 200 is shifted relatively in a direction that is perpendicular to the flow direction and lies in the dividing 11 of the deflection elements 200, 201. Such a direction is indicated by arrow 300.

In a not shown further embodiment it is possible to arrange several deflection elements with a curved deflection surface in order to build a circular structure. This means that the leading surface of each deflection element will be a segment of a circle of the circular structure. The deflection element may be arranged adjacent to each other or with a gap between each other.

### List of reference numerals

- 1: deflection element
- 2: flow direction
- 3: channel

- 10: first section
- 11: dividing surface
- 12: long edge
- 13: short edge

- 20: second section
- 21: uneven surface
- 22: first edge
- 23: side edge
- 24: second edge
- 25: first deflectorpart
- 26: second deflectorpart
- 27: deflectorpartlink

- 110: first set
- 120: second set
- 130: third set

- 200: deflection element
- 201: deflection element
- 202: deflection element

## Claims

1. Static mixing device for mixing at least two components in a flow channel (3) by means of at least one deflection element (1), **characterized in that** the deflection element (1) comprises a first section (10) having a dividing surface (11) that is arranged in flow direction (2) and a second section (20) that is adjacent to the first section (10), wherein said second section (20) extends by means of at least one first deflectorpart (25) above and by means of at least one second deflectorpart (26) below the dividing surface (11), wherein the first deflectorpart (25) and the second deflectorpart (26) are connected via a deflectorpartlink (27).

2. Device according to claim 1, **characterized in that** the dividing surface (11) has a planar surface or a surface that is curved or a combination of them so that the leading edge (12) of the cross section of the dividing surface (11) has a piecewise straight or curved shape, like a sinus wave or a semicircular wave or a segment of a circle.

3. Device according to claim 1 or 2, **characterized in that** the height (H) of the first deflectorpart (25) and the height (T) of the second deflectorpart (26) increases in flow direction (2).

4. Device according to any of the claims 1 to 3, **characterized in that** the first deflectorpart (25) and/or the second deflectorpart (26) have a planar surface or a surface that is curved or a combination of them so that the deflectorline (24) of the cross section of the first deflectorpart (25) and/or the second deflectorpart (26) have a piecewise straight or curved shape, like a sinus wave or a semicircular wave or a segment of a circle.

5. Device according to any of the preceding claims, **characterized in that** the deflectorpartlink (27) has a planar surface or surface that is curved.

6. Device according to any of the preceding claims, **characterized in that** a plurality of deflection elements (1) are arranged one above and/or in front of the other in order to build an arrangement of deflection elements.

7. Device according to claim 6, **characterized in that** a plurality of arrangements are arranged partially overlapping and/or behind each other in a direction that is coaxial to the flow direction.

8. Device according to any of the preceding claims, **characterized in that** the leading edge (12) of preceding deflection element or plurality of arrangements that is/are arranged in front of a subsequent deflection element or plurality of arrangements is/are angular to the leading edge (12) of the subsequent deflection element.

9. Device according to any of the preceding claims, **characterized in that** the components to be mixed together are in gaseous or liquid or solid state.

10. Device according to any of the preceding claims, **characterized in that** a first component to be mixed with further components flows in the flow channel (3) and **in that** the further components are introduced into the flow channel (3) before the deflection element (1) and/or behind the deflection element (1) and/or near the deflection element (1).

11. Use of a device according to any of the preceding claims as a mixing device for internal combustion engines, in particular for combustion engines of cars, trucks, motorcycles or ships.
